# EUROPÄISCHE PATENTSCHRIFT

(11) **EP 1 591 706 B1**
(45) Veröffentlichungstag und Bekanntmachung des Hinweises auf die Patenterteilung: **09.01.2008**
(21) Anmeldenummer: 05103462.7
(22) Anmeldetag: 27.04.2005
(51) Int. Cl.: F16K 31/122, F16K 31/124

(54) **Vorgesteuertes 4/3-Wegeventil**
Pilot operated 4/3-way valve
Distributeur piloté du type 4/3

(30) Priorität: 28.04.2004 DE 102004020794
(43) Veröffentlichungstag der Anmeldung: 02.11.2005
(73) Patentinhaber: Bosch Rexroth AG, 70184 Stuttgart (DE)
(72) Erfinder: Kulmann, Erwin, 71706, Markgröningen (DE); Ghimpu-Mundinger, Radu, 71229, Leonberg (DE)
(74) Vertreter: Kietzmann, Lutz

(56) Entgegenhaltungen:
- DE-A1- 3 644 977
- DE-A1- 19 843 122
- DE-A1- 19 943 691
- DE-B- 1 187 485
- US-A- 4 718 451
- US-A- 4 748 896
- US-A1- 2002 117 217

## Beschreibung

Die vorliegende Erfindung betrifft ein vorgesteuertes 4/3-Wegeventil mit einem Ventilgehäuse, an welchem zwei Arbeitsanschlüsse A, B aus einer normal gesperrten Schaltposition heraus wahlweise mit einem Speisedruckanschluss P oder einem Entlüftungsanschluss R verbindbar sind, wofür im Ventilgehäuse integrierte Schaltmittel über eine Vorsteuerung entsprechend betätigbar sind.

Auf dem technische n Gebiet der Pneumatik kommen sogenannte Ventileinheiten zum Einsatz, welche eine örtlich kompakte Zusammenfassung mehrerer aneinandergereihter einzelner Ventile darstellen. Solche Ventileinheiten schalten im Rahmen eines pneumatischen Systems die Druckmittelbeaufschlagung nachgeordneter Druckmittelaggregate, wie Pneumatikzylinder. Zur Realisierung unterschiedlichster Ansteuersituationen sind die einzelnen zu einer Ventileinheit zusammenfassbaren Ventile mit verschiedenen Ventilfunktionen erhältlich, wie 2/3-, 2x2/3-, 5/2-, 5/3-Ventilfunktionen.

Ein Ventil dieser Art ist aus dem Dokument DE 1 187 485 bekannt.

Insbesondere die Umsetzung von Ventilfunktionen mit drei Schaltstellungen, von denen eine der Schaltstellungen eine gesperrte Schaltposition repräsentiert, erfordert einen erheblichen konstruktiven Aufwand. Üblicherweise wird bei einem als Schieberventil ausgebildeten vorgesteuerten Wegeventil die mittlere, gesperrte Schaltposition dadurch erreicht, dass der Ventilschieber beidseitig mit jeweils einer Druckfeder beaufschlagt ist, so dass sich im Normalfall, d. h. ohne Anliegen von Steuerdruck beidseits des Ventilschiebers, dieser in die mittlere Schaltposition bewegt, in welche alle äußeren Anschlüsse gesperrt sind. Bei nach Art von Sitzventilen ausgeführten 4/3-Wegeventilen ist gewöhnlich eine zusätzliche äußere Beschaltung des Ventils mit entsperrbaren Rückschlagventilen erforderlich, so dass eine Unterbringung dieser Ventilfunktion in einem einzigen Gehäuse schwer möglich ist. Allerdings ist die Unterbringung vieler verschiedener Ventilfunktionen in einem Gehäuse mit gleichen äußeren Abmessungen Vorraussetzung dafür, die Ventile im Rahmen einer Ventileinheit einsetzen zu können.

Es ist daher die Aufgabe der vorliegenden Erfindung ein vorgesteuertes 4/3-Wegeventil zu schaffen, das mit einfachen Mitteln aufgebaut ist und sich direkt in einem einheitlichen Gehäuse einer Ventilbaureihe zum Aufbau von Ventileinheiten integrieren lässt.

Die Aufgabe wird ausgehend von einem vorgesteuerten 4/3-Wegeventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die ventilinternen Schaltmittel zur Ausführung einer 4/3-Funktion entlang zweier benachbarter und je einem Arbeitsanschluss A, B zugeordneter Ventilachsen derart untergebracht sind, dass jede Ventilachse zwei koaxial hintereinander angeordnete Sitzventile beherbergt, von denen jeweils das erste Sitzventil zur Verbindung des zugeordneten Arbeitsanschlusses A bzw. B mit dem Speisedruckanschluss P dient, wogegen das jeweils zweite Sitzventil zur Verbindung des zugeordneten Arbeitsanschlusses A bzw. B mit dem Entlüftungsanschluss R dient.

Der Vorteil der erfindungsgemäßen Lösung liegt insbesondere darin, dass hiermit eine 4/3-Wegeventilfunktion unter zur Hilfenahme der Sitzventiltechnik auf engstem Raum darstellbar ist, so dass die besagte Ventilfunktion sich in einem einheitlichen Gehäuse einer Ventilbaureihe integrieren lässt, um somit bereits vorhandene 3/2-, 5/2-, und dergleichen Ventilfunktionen zu ergänzen.

Gemäß der Erfindung sind die jeder Ventilachse zugeordneten zwei Ventilsitze des ersten Sitzventils und die des zweiten Sitzventils gegenüberliegend zu beiden Enden einer einstückigen Ventilhülse nach innen gerichtet ausgebildet. Durch die einstückige Ventilhülse lassen sich die für die erfindungsgemäße Ventilfunktion erforderlichen einzelnen Ventilsitze der Ventilachsen in einfacher Weise fertigen. Denn zur Montage beider Ventilsitze pro Ventilachse ist lediglich das Einbringen der einstückigen und beide Ventilsitze umfassenden Ventilhülse in das Ventilgehäuse erforderlich.

Vorzugsweise wirken beide Ventilsitzhülsen des erfindungsgemäßen 4/3-Wegeventil zur Bildung der beiden Ventilsitze pro Ventilachse mit je zwei koaxial hintereinander angeordneten Betätigungsstößeln zusammen, deren einander zugewandten Enden mit je einem der Ventilsitze der beiden Sitzventile zusammenwirkt und deren voneinander abgewandten Enden jeweils über Steuerkammern mit dem Steuerdruck der Vorsteuerung axial verstellbar sind. Die insoweit pro Ventilachse getrennten Betätigungsstößel lassen sich in einfacher Weise über eine entsprechen koordinierte Vorsteuerung zur Ausführung der gewünschten 4/3-Wegeventilfunktion ansteuern.

Eine bevorzugte koordinierte Ansteuerung der Betätigungsstößel zu Realisierung der 4/3-Wegeventilfunktion erfolgt derart, dass bezüglich der beiden Ventilachsen einander diagonal gegenüberliegende Steuerkammern jeweils gemeinsam mit dem Steuerdruck beaufschlagt werden. Diese steuerungstechnische Verknüpfung der zu beaufschlagenden Steuerkammern kann in einfacher Weise über eine entsprechend verzweigte Steuerkanalführung umgesetzt werden.

Gemäß einer weiteren die Erfindung verbessernden Maßnahme erfolgt die Rückstellung der Betätigungsstößel des jeweils ersten Sitzventils durch dessen rückwärtige Beaufschlagung durch den ohnehin vorhandenen Speisedruck entgegen der durch die Steuerkammer erzeugbaren Betätigungsrichtung. Somit braucht zur Rückstellung der besagten Betätigungsstößel hier nicht auf weitere Bauteile in Form von Rückstellfedern zurückgegriffen werden. Allein die Rückstellung der anderen beiden Betätigungsstößel des jeweils zweiten Sitzventils kann mittels einer koaxial zwischen der Ventilsitzhülse und dem Betätigungsstößel angeordneten Rückstellfeder erfolgen. Denn eine Rückstellung mittels des Speisedrucks ist an dieser Stelle schwer möglich, da die besagten anderen beiden Betätigungsstößel auf der Entlüftungsseite des Ventils angeordnet sind.

Gemäß einer anderen die Erfindung verbessernde Maßnahme erfolgt die Führung aller Betätigungsstößel entlang der jeweiligen Ventilachse an den einander zugewandten Enden durch ein formschlüssiges Ineinandergreifen, und damit gegenseitig. Ein solches formschlüssiges Ineinandergreifen der einander zugewandten Enden der hintereinander angeordneten Betätigungsstößel kann vorzugsweise über eine Ausnehmung seitens des einen Betätigungsstößels erfolgen, die mit einer korrespondierenden zapfenartigen Anformung seitens des anderen Betätigungsstößels axial entlang des Hubweges verschiebbar zusammenwirkt. Diese Anformung-Ausnehmung-Paarung kann in einfacher Weise beim Spritzgießen eines aus Kunststoff hergestellten Betätigungsstößels gefertigt werden. Die Führung der Betätigungsstößel entlang der jeweiligen Ventilachse an dem voneinander abgewandten Enden kann durch die jeweiligen Steuerkammern selbst oder über axial darüber hinausgehende und formschlüssig mit dem Ventilgehäuse ineinandergreifende Führungsmittel erfolgen.

Um das erfindungsgemäße vorgesteuerte 4/3-Wegeventil mit einem einheitlichen Gehäuse zum Aufbau einer Ventileinheit nutzen zu können, werden vorzugsweise die Arbeitsanschlüsse A, B der Speisedruckanschluss P sowie der Entlüftungsanschluss R an einer gemeinsamen Anschlussfläche am Ventilgehäuse angeordnet, wogegen die mindestens ein elektromagnetisches Pilotventil enthaltende Vorsteuerung auf der gegenüberliegenden Seite des Ventilgehäuses angeordnet ist.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: einen Längsschnitt durch eine vorgesteuertes 4/3-Wegeventil im Bereich beider Ventilachsen, wobei sich das Wegeventil in seiner normal gesperrten Schaltposition befindet,
- Fig. 2: einen Längsschnitt durch das 4/3-Wegeventil nach Figur 1, wobei dieses sich in einer der beiden betätigten Schaltpositionen befindet, und
- Fig. 3: ein Sinnbild der dem 4/3-Wegeventil zugrundeliegenden Ventilfunktion, und
- Fig. 4: eine teilweise geschnittene Seitenansicht des 4/3-Wegeventils nach Figur 2 im Schnittbereich B-B.

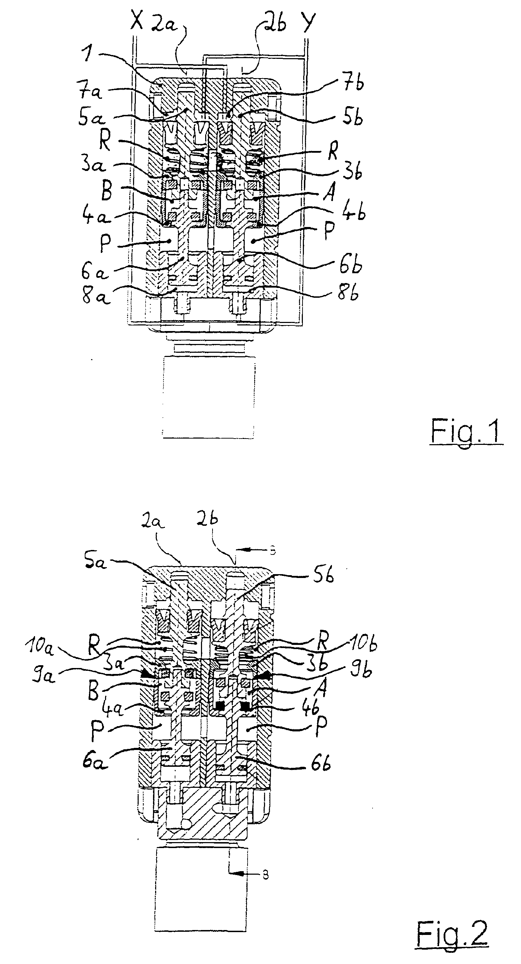

Gemäß Fig. 1 umfasst das vorgesteuerte 4/3-Wegeventil ein Ventilgehäuse 1 mit einem in dieser Fig. verdeckten - zentralen Speisedruckanschluss P, einem zentralen Entlüftungsanschluss R sowie zwei Arbeitsanschlüsse A, B. (Dargestellt sind in dieser Ansicht die mit den besagten äußeren Anschlüssen in Verbindung stehenden ventilinternen Kammern.) Innerhalb des Ventilgehäuses 1 befinden sich Schaltmittel, über deren Betätigung die Schaltung des Druckmittelstroms entsprechend der 4/3-Wegeventilfunktion erfolgt. Eine Betätigung dieser Schaltmittel erfolgt über eine - hier nicht weiter im Detail dargestellte - Vorsteuerung.

Konkret sind die besagten Schaltmittel entlang zweier benachbarter und je einem Arbeitsanschluss A bzw. B zugeordneter Ventilachsen 2a, 2b untergebracht. Jeder Ventilachse 2a, 2b sind zwei koaxial hintereinander angeordnete Ventilsitze 3a, 4a bzw. 3b, 4b zugeordnet. Der jeweils erste Ventilsitz 4a; 4b beider Ventilachse 2a, 2b dient der Verbindung des hier zugeordneten Arbeitsanschlusses A; B mit dem Speisedruckanschluss P. Über dem zweiten Ventilsitz 3a; 3b wird die Verbindung des hier zugeordneten Arbeitsanschlusses A; B mit dem Entlüftungsanschluss R geschaltet. Hierzu wirkt der Ventilsitz 3a mit einem Betätigungsstößel 5a zusammen, wogegen der koaxiale Ventilsitz 4a mit einem Betätigungsstößel 6a zusammenwirkt. Analog hierzu wirkt der achsparallel Ventilsitz 3b mit einem Betätigungsstößel 5b zusammen, wogegen der koaxiale Ventilsitz mit einem Betätigungsstößel 6b zusammenwirkt. Die axiale Betätigung der insgesamt 4 Betätigungsstößel 5a, 6a; 5b, 6b zum Öffnen oder Schließen der zugeordneten Ventilsitze 3a, 4a; 3b, 4b erfolgt nach Art einer Vorsteuerung indem der Betätigungsstößel 5a über eine Steuerkammer 7a beaufschlagbar ist, der Betätigungsstößel 6a über eine Steuerkammer 8a beaufschlagbar ist, der Betätigungsstößel 5b über eine Steuerkammer 7b sowie der Betätigungsstößel 6b über eine Steuerkammer 8b beaufschlagbar ist. Die Vorsteuerung des 4/3-Wegeventils beaufschlagt die bezüglich der beiden Ventilachsen 2a und 2b jeweils einander diagonal gegenüberliegenden Steuerkammern 7a und 8b mit dem Steuerdruck Y sowie analog hierzu die Steuerkammern 7b und 8a mit dem Steuerdruck X.

In der hier dargestellten Schaltposition ist keine der Steuerkammern 7a, 7b und 8a und 8b mit einem Steuerdruck beaufschlagt, so dass sich das 4/3-Wegeventil in der nicht betätigten gesperrten Schaltposition befindet, in welcher die Arbeitsanschlüsse A und B sowie der Speisedruckanschluss P und der Entlüftungsanschluss R gesperrt sind. Hierbei sind Ersichtlicherweise alle 4 Sitzventile 3a, 4a; 3b, 4b geschlossen.

Gemäß Fig. 2 befindet sich das 4/3-Wegeventil in der einen Betätigungsstellung, in welcher durch Beaufschlagung der Steuerkammern 7b und 8a mit dem Steuerdruck X die Sitzventile 3b und 4a geöffnet sind. Hierdurch wird der Arbeitsanschluss A durch Verbindung mit dem Entlüftungsanschluss R entlüftet, wogegen der andere Arbeitsanschluss B durch Verbindung mit dem Steuerdruckanschluss P belüftet wird. (In der dritten - nicht weiter dargestellten Schaltstellung - ergibt sich eine entsprechend umgekehrte Be- und Entlüftung der Arbeitsanschlüsse A, B.) Die Ventilsitze der koaxial hintereinanderliegenden Sitzventile 3a und 4a sind an einer gemeinsamen, zweigeteilten Ventilsitzhülse 9a ausgebildet, wogegen die Ventilsitze der anderen beiden koaxial zueinander angeordneten Ventilsitze der Sitzventile 3b und 4b an einer gemeinsamen, zweigeteilten Ventilsitzhülse 9b ausgebildet sind. Die Rückstellung der speisedruckseitigen Betätigungsstößel 5a, 5b des jeweils zweiten Sitzventils 3a bzw. 3b erfolgt mittels einer koaxial zwischen der Ventilsitzhülse 9a bzw. 9b und dem Betätigungsstößel 5a bzw. 5b angeordneten Rückstellfeder 10a bzw. 10b. Dagegen erfolgt die Rückstellung der speisedruckseitigen Stößel 6a und 6b des jeweils ersten Sitzventils 4a bzw. 4b allein durch dessen rückwärtige Beaufschlagung durch den Speisedruck entgegen durch die Steuerkammern 8a und 8b erzeugten Betätigungsrichtung.

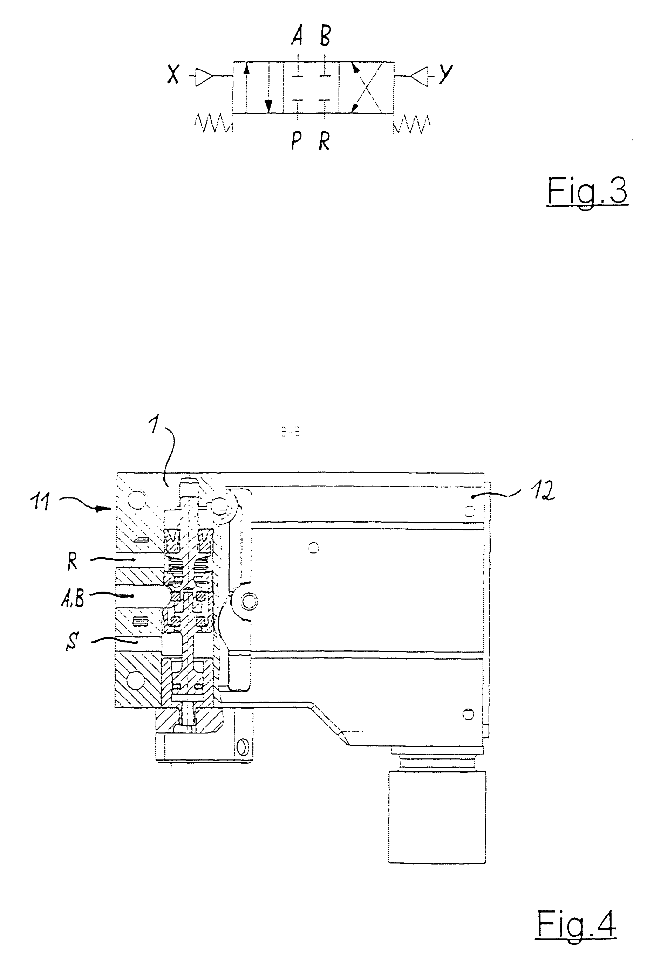

Die Fig. 3 zeigt zur Vervollständigung das Sinnbild das 4/3-Wegeventils entsprechend der vorstehenden Beschreibung.

Gemäß Fig. 4 (Schnitt B-B) sind die Arbeitsanschlüsse A, B, der Speisedruckanschluss P sowie der Entlüftungsanschluss R an einer gemeinsamen Anschlussfläche 11 am Ventilgehäuse 1 angeordnet. Eine Vorsteuerung 12 befindet sich an der gegenüberliegenden Seite des Ventilgehäuses 1. In dieser Ausgestaltungsform ist das 4/3-Wegeventil zur Verwendung innerhalb einer Ventileinheit geeignet.

### Bezugszeichenliste

- 1: Ventilgehäuse
- 2: Ventilachse
- 3: Sitzventil (R)
- 4: Sitzventil (P)
- 5: Betätigungsstößel (A)
- 6: Betätigungsstößel (B)
- 7: Steuerkammer (R)
- 8: Steuerkammer (P)
- 9: Ventilsitzhülse
- 10: Rückstellfeder
- 11: Anschlussfläche
- 12: Vorsteuerung

## Patentansprüche

1. Vorgesteuertes 4/3-Wegeventil mit einem Ventilgehäuse (1), an welchem zwei Arbeitsanschlüsse (A; B) aus einer normal gesperrten Schaltposition heraus wahlweise mit einem Speisedruckanschluss (P) oder einem Entlüftungsanschluss (R) verbindbar sind, wofür im Ventilgehäuse (1) integrierte Schaltmittel über eine Vorsteuerung (12) entsprechend betätigbar sind und entlang zweier benachbarter und je einem Arbeitsanschluss (A; B) zugeordneter Ventilachsen (2a, 2b) derart untergebracht sind, dass jeder Ventilachse (2a; 2b) zwei koaxial hintereinander angeordnete Sitzventile (3a, 4a; 3b, 4b) zugeordnet sind, von denen jeweils das erste Sitzventil (4a; 4b) zur Verbindung des zugeordneten Arbeitsanschlusses (A; B) mit dem Speisedruckanschluss (P) dient, wogegen das jeweils zweite Sitzventil (3a; 3b) zur Verbindung des zugeordneten Arbeitsanschlusses (A; B) mit dem Entlüftungsanschluss (R) dient,
**dadurch gekennzeichnet, dass** die jeder Ventilachse (2a, 2b) zugeordneten zwei Ventilsitze des ersten Sitzventils (3a; 4a) und die des zweiten Sitzventils (3b; 4b) gegenüberliegend zu beiden Enden je einer Ventilsitzhülse (9a; 9b) nach Innen gerichtet ausgebildet sind.

2. Vorgesteuertes 4/3-Wegeventil nach Anspruch 1,
**dadurch gekennzeichnet, dass** jede Ventilsitzhülse (9a, 9b) zur Bildung der beiden Sitzventile (3a, 4a; 3b, 4b) mit zwei koaxial hintereinander angeordneten Betätigungsstößeln (5a, 6a; 5b, 6b) zusammenwirkt, deren einander zugewandten Enden mit je einem der Ventilsitze der beiden Sitzventile (3a, 4a; 3b, 4b) zusammenwirkt und deren voneinander abgewanden Enden jeweils über Steuerkammern (7a, 7b; 8a, 8b) mit dem Steuerdruck der Vorsteuerung axial verstellbar sind.

3. Vorgesteuertes 4/3-Wegeventil nach Anspruch 2,
**dadurch gekennzeichnet, dass** die Vorsteuerung zur Realisierung der 4/3-Wegeventil Funktion die bezüglich der beiden Ventilachsen (2a, 2b) einander diagonal gegenüberliegenden Steuerkammern (7a, 8b; 7b, 8a) jeweils gemeinsam mit dem Steuerdruck (X bzw. Y) beaufschlagt.

4. Vorgesteuertes 4/3-Wegeventil nach Anspruch 2 oder 3,
**dadurch gekennzeichnet, dass** die Rückstellung der speisedruckseitigen Betätigungsstößel (6a, 6b) des jeweils ersten Sitzventils (4a; 4b) durch dessen rückwärtige Beaufschlagung durch den Speisedruck entgegen der durch die Steuerkammer (8a; 8b) erzeugbaren Betätigungsrichtung erfolgt.

5. Vorgesteuertes 4/3-Wegeventil nach Anspruch 2 oder 3,
**dadurch gekennzeichnet, dass** die Rückstellung der entlüftungsseitigen Betätigungsstößel (5a, 5b) des jeweils zweiten Sitzventils (3a; 3b) mittels einer koaxial zwischen der Ventilsitzhülse (9a, 9b) und dem Betätigungsstößel (5a, 5b) angeordneten Rückstellfeder (10a; 10b) erfolgt.

6. Vorgesteuertes 4/3-Wegeventil nach Anspruch 2,
**dadurch gekennzeichnet, dass** die Führung der Betätigungsstößel (5a, 5b; 6a, 6b) entlang der jeweiligen Ventilachse (2a; 2b) an den einander zugewandten Enden durch ein formschlüssiges Ineinandergreifen sowie durch die zugeordneten Ventilsitze (3a, 3b; 4a, 4b) erfolgt.

7. Vorgesteuertes 4/3-Wegeventil nach Anspruch 6,
**dadurch gekennzeichnet, dass** das formschlüssige Ineinandergreifen der einander zugewandten Enden der hintereinander angeordneten Betätigungsstößel (5a, 6a; 5b, 6b) über eine Ausnehmung seitens des einen Betätigungsstößels (5a; 5b) erfolgt, die mit einer korrespondierenden zapfenartigen Anformung seitens des anderen Betätigungsstößels (6a; 6b) axial entlang des Hubweges verschiebbar zusammenwirkt.

8. Vorgesteuertes 4/3-Wegeventil nach Anspruch 2,
**dadurch gekennzeichnet, dass** die Führung der Betätigungsstößel (5a, 6a; 5b, 6b) entlang der jeweiligen Ventilachse (2a; 2b) an den voneinander abgewandten Enden durch die jeweiligen Steuerkammern (7a, 8a; 7b, 8b) oder über axial darüber hinausgehende und formschlüssig mit dem Ventilgehäuse (1) ineinandergreifende Führungsmittel erfolgt.

9. Vorgesteuertes 4/3-Wegeventil nach einem der vorstehenden Ansprüche,
**dadurch gekennzeichnet, dass** die Arbeitsanschlüsse (A,B), der Speisedruckanschluss (P) und der Entlüftungsanschluss (R) an einer gemeinsamen Anschlussfläche (11) am Ventilgehäuse (1) angeordnet sind, wogegen die mindestens ein elektromagnetisches Pilotventil enthaltende Vorsteuerung (12) auf der gegenüberliegenden Seite des Ventilgehäuses (1) angeordnet ist.

## Claims

1. A pilot controlled four-way, three-position directional control valve, having a valve housing (1), at which, starting from a normally blocked switching position, two working ports (A, B) are optionally connectable with a feeding pressure port (P) or a venting port (R), wherein, to do this, switching means integrated in the valve housing (1) are correspondingly operable via a pilot control (12), and accommodated along two adjacent valve axes (2a, 2b) each associated with one working port (A, B) in such a way that each valve axis (2a; 2b) is associated with two seat valves (3a, 4a; 3b, 4b), coaxially arranged in tandem, wherein each first seat valve (4a; 4b) thereof is for connecting the associated working port (A; B) with the feeding pressure port (P), whereas each second seat valve (3a; 3b) is for connecting the associated working port (A; B) with the venting port (R),
**characterized in that** the two valve seats associated with each valve axis (2a, 2b) of the first seat valve (3a; 4a) and those of the second seat valve (3b; 4b) are formed at both ends of a valve seat sleeve (9a, 9b) and facing inwards.

2. The pilot controlled four-way, three-position directional control valve according to claim 1,
**characterized in that** each valve seat sleeve (9a, 9b) interacts with two actuating rods (5a, 6a; 5b, 6b), coaxially arranged in tandem, to form the two seat valves (3a, 4a; 3b, 4b), wherein the ends of said actuating rods (5a, 6a; 5b, 6b) facing each other each interact with one of the valve seats of the two seat valves (3a, 4a; 3b, 4b) and their ends facing away from each other are each axially adjustable by the control pressure of the pilot control by means of control chambers (7a, 7b; 8a, 8b).

3. The pilot controlled four-way, three-position directional control valve according to claim 2,
**characterized in that**, to implement the four-way, three-position directional control valve function, the pilot control always commonly applies the control pressure (X, Y) to the two control chambers (7a, 8b; 7b, 8a, respectively) facing each other on a diagonal with respect to the valve axes (2a, 2b).

4. The pilot controlled four-way, three-position directional control valve according to claim 2 or 3,
**characterized in that** the return of the actuating rods (6a, 6b) of each first seat valve (4a; 4b) on the side of the feeding pressure is carried out by applying the feeding pressure to its back in a direction opposed to the actuating direction achieved by the control chamber (8a; 8b).

5. The pilot controlled four-way, three-position directional control valve according to claim 2 or 3,
**characterized in that the** return of the actuating rods (5a, 5b) of each second seat valve (3a; 3b) on the venting side is carried out by means of a return spring (10a; 10b) coaxially disposed between the valve seat sleeve (9a, 9b) and the actuating rod (5a, 5b).

6. The pilot controlled four-way, three-position directional control valve according to claim 2,
**characterized in that** the guiding of the actuating rods (5a, 5b; 6a, 6b) along each valve axis (2a; 2b) at the ends facing each other is carried out by positive engagement and by the associated valve seats (3a, 3b; 4a, 4b).

7. The pilot controlled four-way, three-position directional control valve according to claim 6,
**characterized in that** the positive engagement of the ends facing each other of the actuating rods (5a, 6a; 5b, 6b), arranged in tandem, is carried out via a recess on the side of one of the actuating rods (5a; 5b), which interacts with a corresponding stud-like protrusion on the side of the other one of said actuating rods (6a; 6b) axially along the stroke path.

8. The pilot controlled four-way, three-position directional control valve according to claim 2,
**characterized in that** the guiding of the actuating rods (5a, 6a; 5b, 6b) along each valve axis (2a; 2b) is carried out at the ends facing away from each other by each of the control chambers (7a, 8a; 7b, 8b) or by guiding means axially extending beyond the latter and positively engaging the valve housing (1).

9. The pilot controlled four-way, three-position directional control valve according to any one of the preceding claims,
**characterized in that** the working ports (A, B), the feeding pressure port (P) and the venting port (R) are arranged on a common mounting surface (11) at the valve housing (1), whereas the pilot control (12) including at least one electromagnetic pilot valve is arranged on the opposite side of said valve housing (1).

## Revendications

1. Distributeur piloté à 4 voies/3 positions, comprenant un boîtier de distributeur (1) dans lequel deux raccords de travail (A ; B) peuvent être reliés, en partant d'une position de commutation normalement bloquée, avec un raccord de pression d'alimentation (P) ou avec un raccord d'échappement (R), ce pourquoi des moyens de commutation intégrés dans le boîtier de distributeur sont susceptibles d'être actionnés de façon correspondante via un pilotage (12) et sont logés le long de deux axes de valve (2a, 2b) voisins associés chacun à un raccord de travail (A ; B) de telle sorte qu'à chaque axe de valve (2a ; 2b) sont associés deux clapets à siège (3a, 4a ; 3b, 4b) agencés coaxialement l'un derrière l'autre, parmi lesquels le premier clapet à siège (4a ; 4b) sert à la liaison du raccord de travail associé (A ; B) avec le raccord de pression d'alimentation (P), et par contre le second clapet à siège respectif (3a ; 3b) sert à la liaison du raccord de travail associé (A ; B) avec le raccord d'échappement (R),
**caractérisé en ce que** les deux sièges de clapet, associés à chaque axe de valve (2a, 2b), du premier clapet à siège (3a ; 4a) et ceux du second clapet à siège (3b ; 4b) sont réalisés à l'opposé des deux extrémités d'une douille respective (9a ; 9b) formant siège de clapet et dirigés vers l'intérieur.

2. Distributeur piloté à 4 voies/3 positions, **caractérisé en ce que** chaque douille (9a ; 9b) formant siège de clapet coopère, pour réaliser les deux clapets à siège (3a, 4a ; 3b, 4b), avec deux poussoirs d'actionnement (5a, 6a ; 5b, 6b) agencés coaxialement l'un derrière l'autre, dont les extrémités tournées l'une vers l'autre coopèrent avec un siège de clapet respectif des deux clapets à siège (3a, 4a ; 3b, 4b), et dont les extrémités détournées l'une de l'autre sont axialement déplaçables au moyen de la pression de commande du pilotage, via des chambres de commande respectives (7a, 7b ; 8a, 8b).

3. Distributeur piloté à 4 voies/3 positions selon la revendication 2, **caractérisé en ce que** le pilotage, pour réaliser la fonction de distributeur à 4 voies/3 positions, alimente respectivement conjointement avec la pression de commande (X, respectivement Y) les chambres de commande (7a, 8b ; 7b, 8a) diagonalement à l'opposé l'une de l'autre par rapport aux deux axes de valve (2a, 2b).

4. Distributeur piloté à 4 voies/3 positions selon la revendication 2 ou 3, **caractérisé en ce que** le rappel du poussoir d'actionnement (6a, 6b), côté pression d'alimentation, du premier clapet à siège respectif (4a ; 4b) a lieu par son alimentation au moyen de la pression d'alimentation sur son côté postérieur et à l'encontre de la direction d'actionnement générée par la chambre de commande (8a ; 8b).

5. Distributeur piloté à 4 voies/3 positions selon la revendication 2 ou 3, **caractérisé en ce que** le rappel du poussoir d'actionnement (5a, 5b), côté échappement, du second clapet à siège respectif (3a ; 3b) a lieu au moyen d'un ressort de rappel (10a ; 10b) agencé coaxialement entre la douille (9a, 9b) formant siège de clapet et le poussoir d'actionnement (5a, 5b).

6. Distributeur piloté à 4 voies/3 positions selon la revendication 2, **caractérisé en ce que** le guidage du poussoir d'actionnement (5a, 5b ; 6a, 6b) le long de l'axe de valve respectif (2a ; 2b) a lieu au niveau des extrémités tournées l'une vers l'autre par engagement réciproque à coopération de formes ainsi que par les sièges de clapet associés (3a, 3b ; 4a, 4b).

7. Distributeur piloté à 4 voies/3 positions selon la revendication 6, **caractérisé en ce que** l'engagement réciproque à coopération de formes des extrémités tournées l'une vers l'autre des poussoirs d'actionnement (5a, 6a ; 5b, 6b) agencés l'un derrière l'autre a lieu via un évidement du côté de l'un des poussoirs d'actionnement (5a ; 5b), qui coopère avec un relief correspondant en forme de tenon du côté de l'autre poussoir d'actionnement (6a ; 6b) avec translation axiale le long de la course de levage.

8. Distributeur piloté à 4 voies/3 positions selon la revendication 2, **caractérisé en ce que** le guidage des poussoirs d'actionnement (5a, 6a ; 5b, 6b) le long de l'axe de valve respectif (2a ; 2b) a lieu au niveau des extrémités détournées l'une de l'autre par les chambres de commande respectives (7a, 8a ; 7b, 8b) ou par des moyens de guidage qui dépassent axialement lesdites extrémités et s'engagent dans le boîtier de distributeur (1) avec coopération de formes.

9. Distributeur piloté à 4 voies/3 positions selon l'une des revendications précédentes, **caractérisé en ce que** les raccords de travail (A, B), le raccord de pression d'alimentation (P) et le raccord d'échappement (R) sont agencés sur le boîtier de distributeur (1) au niveau d'une surface de raccordement commune (11), alors que le pilotage (12), qui contient au moins une valve pilote électromagnétique, est agencé sur le côté opposé du boîtier de distributeur (1).
